# FASCICULE DE BREVET EUROPEEN

(11) **EP 0 793 624 B1**
(45) Date de publication et mention de la délivrance du brevet: **26.11.2003**
(21) Numéro de dépôt: 96932640.4
(22) Date de dépôt: 24.09.1996
(51) Int. Cl.: C03C 3/078, C03C 3/087, C03C 3/089, C03C 3/091

(54) **PROCEDE DE FABRICATION DE LENTILLES OPTIQUES**
VERFAHREN ZUR HERSTELLUNG VON OPTISCHEN LINSEN
METHOD FOR MAKING OPTICAL LENSES

(30) Priorité: 25.09.1995 FR 9511227
(43) Date de publication de la demande: 10.09.1997
(73) Titulaire: HOLOPHANE, 27700 Les Andelys (FR)
(72) Inventeur: GANDARILLAS-LASTRA, José, Francisco, E-19200 Azuqueca de Henares (ES); TROUILLE, Benoit, F-77260 La Ferté-sous-Jouarre (FR)
(74) Mandataire: CAPRI
(86) Numéro de dépôt international: FR9601486
(87) Numéro de publication internationale: WO97011918

(56) Documents cités:
- EP-A- 0 573 020
- DE-A- 2 749 683
- DE-A- 3 803 422
- FR-A- 2 690 434
- JP-A- 2 074 536

## Description

L'invention concerne des lentilles telles que des lentilles asphériques et leur procédé de fabrication. Bien que l'invention ne se limite pas à ce type d'application, elle sera décrite plus particulièrement en référence à la réalisation de blocs optiques d'illumination et de signalisation pour véhicules automobiles. Plus précisément encore, elle sera décrite en référence à des projecteurs ellipsoïdaux dont l'un des éléments constitutifs est une lentille asphérique.

Les projecteurs ellipsoïdaux représentent actuellement une faible part des projecteurs de l'industrie automobile mais la demande les concernant est grandissante. En effet, les nouvelles formes des voitures et les améliorations notamment du coefficient de pénétration dans l'air de ces véhicules conduisent les constructeurs automobiles à choisir ce type de projecteurs. Les projecteurs ellipsoïdaux sont d'un encombrement plus limité, tout du moins pour ce qui est de leur hauteur et offrent ainsi plus de liberté pour réaliser l'avant des véhicules et plus particulièrement la forme du capot. II est ainsi possible d'améliorer l'aérodynamisme des véhicules et de laisser évoluer les formes des véhicules selon les propositions actuelles des stylistes. Par ailleurs, la qualité d'éclairage des projecteurs ellipsoïdaux est notamment supérieure à celle de projecteurs paraboloïques d'utilisation plus courante ; la transmission de la lumière émise est en effet nettement supérieure avec des projecteurs ellipsoïdaux.

De telles lentilles ont déjà été réalisées pour des applications automobiles et plus précisément pour réaliser des projecteurs ellipsoïdaux. Pour réaliser ces lentilles, il est connu d'utiliser des compositions de verre usuelles pour des applications optiques.

Une composition de ce typé est par exemple le verre extra blanc commercialisé par la société SCHOTT avec la référence B 270 dont les teneurs pondérales sont les suivantes :

| | |
|---|---|
| 70,3 % | SiO₂ |
| 9,0 % | Na₂O |
| 7,5 % | K₂O |
| 10,0 % | CaO |
| 2,5 % | BaO |
| 0,2 % | MgO |
| 0,5 % | Sb₂ O₃ |

De tels verres se caractérisent notamment par une transmission dans le visible supérieure à 80% et des indices de réfraction pour les différentes longueurs d'ondes proches les uns des autres. Les compositions se distinguent notamment par la présence de K₂O et de BaO, ce dernier oxyde permettant notamment de modifier l'indice de réfraction sans affecter le coefficient de dispersion, évitant ainsi un trouble des images tel qu'une aberration chromatique. Ces verres se caractérisent également par leur état de surface, ceux-ci ayant subi un traitement du type poli-feu. De plus, ces verres ne présentent quasiment pas d'impuretés ni de bulles qui peuvent entraîner une diffraction et donc un éblouissement et la composition ne contient pas de fer celui-ci créant une absorption pour certaines longueurs d'ondes.

Il s'avère que la qualité de ces verres, plus particulièrement leur état de surface, nécessite des traitements spécifiques relativement coûteux. De même, la composition de ces verres et notamment les éléments contribuant plus particulièrement aux propriétés optiques sont des éléments relativement onéreux. En conséquence, le coût de ces verres optiques est très élevé ce qui limite le plus souvent l'utilisation de ces lentilles pour des projecteurs ellipsoïdaux destinés à des véhicules automobiles haut de gamme.

Les inventeurs se sont donné pour mission la réalisation de lentilles présentant une bonne transmission dans le visible, c'est-à-dire supérieure à 80%, et des indices de réfraction pour les différentes longueurs d'ondes proches les uns des autres.

Un autre but de l'invention est de réaliser ces lentilles avec un coût inférieur à celui des lentilles actuellement réalisées.

Ces objectifs sont atteints par le procédé défini en revendication 1. Dans l'invention, la lentille est composée d'une matrice verrière comprenant les constituants ci-après dans les proportions pondérales suivantes :

| | |
|---|---|
| SiO₂ | 65 - 85 % |
| Al₂O₃ | 0 - 10 % |
| B₂O₃ | 0 - 20 % |
| Li₂O + Na₂O + K₂O | 3 - 20 % |
| CaO + MgO + BaO | 0 - 15 % |
| FeO + Fe₂O₃ | 0 - 0.1 %, |

la teneur en K₂O demeurant égale ou inférieure à 1% et la teneur en BaO demeurant égale ou inférieure à 1 %.

Cette matrice verrière peut également comporter des impuretés, notamment apportées par les matières premières vitrifiables, la teneur de celles-ci ne pouvant excéder 1%.

Une telle matrice verrière est par exemple une matrice habituellement utilisée pour la réalisation de verre plat par la technique « float ». Il s'agit par exemple de la matrice verrière comprenant les constituants ci-après dans les proportions pondérales suivantes :

| | |
|---|---|
| SiO₂ | 71 ,4% |
| Al₂O₃ | 0 , 6 % |
| Na₂O | 13 , 7 % |
| CaO | 9 , 6 % |
| MgO | 4 , 0 % |

Selon une première variante de l'invention la lentille est composée d'une matrice verrière du type silico-sodo-calcique comprenant les constituants ci-après dans les proportions pondérales suivantes :

| | |
|---|---|
| SiO₂ | 65 - 75 % |
| Al₂O₃ | 0 - 10 % |
| Li₂O + Na₂O + K₂O | 8 - 18 % |
| CaO + MgO + BaO | 5 - 15 % |
| FeO + Fe₂O₃ | 0 - 0.1 %, |

la teneur en K₂O demeurant égale ou inférieure à 1% et la teneur en BaO demeurant égale ou inférieure à 1 %.

La silice SiO₂ est l'élément principal formant le réseau vitreux. Sa teneur est donc importante et de préférence supérieure à 72%. SiO₂ étant un élément difficile à fondre, la viscosité étant très importante pour de fortes teneurs, elle n'excédera de préférence pas 74%.

Al₂O₃ permet de stabiliser le réseau vitreux à développer et participe à la constitution dudit réseau. La teneur est de préférence non nulle mais reste de préférence inférieure à 3%, au-delà Al₂O₃ peut devenir néfaste pour les propriétés mécaniques du verre.

Les éléments alcalins favorisent notamment la fusion de la composition ; on parle de fondants. On utilise principalement Na₂O, notamment pour des raisons de coût, celui-ci étant peu onéreux. Les alcalins ont toutefois un effet négatif sur les résistances mécanique et chimique ; leur teneur sera de préférence inférieure à 16% et de préférence supérieure à 13%, ces éléments contribuant à une diminution de la viscosité.

Les éléments alcalino-terreux, s'ils facilitent également la fusion du verre, agissent essentiellement comme stabilisateur de la structure du verre en augmentant les stabilités chimique et mécanique. Ces éléments contribuent également à améliorer l'intervalle de travail et donc la moulabilité : On utilise principalement CaO. Les teneurs en alcalino-terreux seront avantageusement supérieures à 8% et inférieures à 11%.

La teneur en oxyde de fer (ferreux ou ferrique) est avantageusement inférieure à 0,1%, cet élément modifiant la coloration du verre.

La lentille selon l'invention est ainsi avantageusement composée d'une matrice verrière du type silico-sodo-calcique comprenant les constituants ci-après dans les proportions pondérales suivantes :

| | |
|---|---|
| SiO₂ | 72 - 74 % |
| Al₂O₃ | 1 - 3 % |
| Li₂O + Na₂O + K₂O | 13 - 16 % |
| CaO + MgO + BaO | 8 - 11 % |
| FeO + Fe₂O₃ | 0 - 0.1 % |

Selon une seconde variante de l'invention la lentille est composée d'une matrice verrière du type boro-silicate comprenant les constituants ci-après dans les proportions pondérales suivantes :

| | |
|---|---|
| SiO₂ | 65 - 85 % |
| B₂O₃ | 10 - 20 % |
| Li₂O + Na₂O + K₂O | 3 - 20 % |
| Al₂O₃ | 0 - 5 % |

la teneur en K₂O demeurant égale ou inférieure à 1%.

De telles lentilles sont par exemples réalisée à partir d'une des compositions A et B comprenant les constituants ci-après dans les proportions pondérales suivantes :

| | A | B |
|---|---|---|
| SiO₂ | 80 | 81 |
| B₂O₃ | 13 | 13 |
| Na₂O | 4,1 | 3,6 |
| Al₂O₃ | 2,2 | 2,2 |

Les essais réalisés ont montré que les compositions ainsi définies selon l'invention satisfont aux exigences requises pour la réalisation de lentilles et plus particulièrement de lentilles asphériques utilisées pour la réalisation de projecteurs ellipsoïdaux destinés à équiper des véhicules automobiles. Une lentille réalisée à partir d'une telle composition présente notamment une transmission correspondant au spectre visible supérieure à 80%. De plus, elle présente une faible dispersion des indices de réfraction pour les différentes longueurs d'ondes. Par ailleurs, des essais en milieu confiné simulant une utilisation de ces lentilles dans un projecteur automobile ont montré que les lentilles selon l'invention présentent une bonne tenue à la corrosion.

Ces compositions peuvent donc être utilisées, de façon surprenante pour fabriquer des lentilles et sont particulièrement intéressantes d'un point de vue coût notamment en ce qui concerne les compositions de type silico-sodo-calcique, car les éléments onéreux tels que BaO ou K₂O sont présents en très faible quantité lorsqu'ils existent.

Ce type de composition habituellement utilisée pour des applications plus ordinaires telles que la fabrication, de verre plat ou bien d'articles ménagers en verre, par exemple des verres ou gobelets, ne subit d'ordinaire aucune préparation spécifique ni d'étapes de finition particulières, telles qu'un polissage.

Il est apparu de façon surprenante que les lentilles selon l'invention pouvaient également être réalisées, de façon ordinaire c'est-à-dire avec peu de précautions notamment lors de la fusion et ne nécessitaient pas de finition du type poli-feu au cours de l'élaboration. II s'avère que cette simplification de fabrication à l'égard des compositions précédemment évoquées contribue également à obtenir des lentilles avec un coût inférieur à celui de celles fabriquées selon l'art antérieur.

L'invention propose également le procédé de fabrication des lentilles qui viennent d'être décrites, tel que défini précédemment.

Ce procédé de fabrication de lentilles consiste à réchauffer au moins un élément de verre jusqu'à la température correspondant à une viscosité en logarithme comprise entre 4,5 et 5,5, et de préférence égale à 5, et à presser ledit élément.

Selon une première variante de l'invention, l'élément de verre est l'extrémité d'une barre préalablement préparée. Le procédé consiste alors à réchauffer l'extrémité de la barre de verre en plaçant celle-ci dans un four et lorsque la température voulue est atteinte, l'extrémité chaude est placée entre deux demi-moules. Le pressage est alors effectué de sorte que le verre remplisse la cavité du moule. Ensuite, afin de détacher l'élément pressé du reste de la barre, on tire sur cette barre alors que le moule est encore fermé pour créer une striction et cisailler, à l'aide de ciseaux, la barre de verre et la remettre en chauffe dans le four. Ce procédé est difficilement automatisable, la plupart des étapes devant être effectuées par un opérateur. De plus, le principe de ce procédé interdit de refermer totalement le moule lors du pressage puisque l'élément pressé constitue toujours une partie de la barre. Cette particularité entraîne une consommation de verre plus importante que celle nécessaire pour la réalisation de la lentille, une partie du verre allant déborder par l'ouverture du moule lors du pressage ; c'est-à-dire qu'il est nécessaire de prévoir un volume suffisant de l'élément de verre pressé considérant qu'une partie de celui-ci va s'écouler à l'extérieur du moule durant le pressage. De plus une étape supplémentaire est nécessaire, celle-ci consistant à élimer la bavure de la lentille pressée.

Selon une autre variante préférée de l'invention, le procédé consiste à réchauffer et presser une préforme, ladite préforme étant obtenue par pressage d'une goutte de verre à l'aide d'un outil mécanique. Une telle préforme présente par exemple une forme paraboloïde avec un talon arrondi, celui-ci pouvant présenter des irrégularités formant des zones limitées sur lesquelles ladite préforme peut reposer. Ces zones peuvent permettre lors du traitement ultérieur, sur lequel il sera revenu par la suite, de limiter les points de contact avec la surface sur laquelle est positionnée la préforme. Pour réaliser ces préformes, il est possible d'utiliser tout type de techniques connues de l'homme du métier. La fusion des matières premières peut par exemple être réalisée dans un four verrier du type four en continu à boucle utilisant un hydrocarbure liquide comme apport énergétique ou bien, par exemple, un four électrique. Le verre fondu peut alors être conduit au travers d'un canal ou feeder jusqu'à une extrémité de ce canal appelé encore cuvette d'écoulement, au niveau de laquelle, par exemple, un poinçon associé à un mécanisme de cisaillement peut former une goutte de verre appelée encore paraison. Le dispositif est conçu de façon à obtenir une paraison dont le poids est celui désiré pour la préforme. Le poids et la géométrie sont définis au préalable à partir de ceux de la lentille que l'on souhaite réaliser. La paraison peut ensuite être conduite à un dispositif de moulage par exemple tel que ceux habituellement utilisés dans l'industrie de la gobeleterie ou du flaconnage. Les préformes ainsi réalisées peuvent être stockées en prévision de la fabrication de lentilles.

Un mode de réalisation préféré de l'invention pour réaliser des lentilles à partir de préformes consiste à presser celles-ci après avoir chauffé lesdites préformes jusqu'à une température correspondant à une viscosité en logarithme décimal comprise entre 4,5 et 5,5. Dans le cas d'une composition du type silico-sodo-calcique, le chauffage de la préforme est par exemple réalisé en deux opérations successives ; dans un premier temps, on élève la température du verre jusqu'à une température comprise entre 300 et 600°C et de préférence égale à 500°C. Cette première opération s'étale sur une période d'environ trente minutes et permet d'éviter tout risque de dégradation de la préforme telle que la formation d'éclats dûs à un choc thermique: Dans un second temps, la préforme est chauffée pendant un temps inférieur à 10 minutes à une température comprise entre 750 et 1100°C et de préférence égale à 890°C. Lors du chauffage des préformes, la base de ladite préforme adhère à la surface du matériau à son contact, par exemple au matériau constituant la sole du four de réchauffage. L'invention prévoit avantageusement un matériau autorisant un décollage ultérieur. L'invention prévoit ainsi de réaliser la sole du four ou tout autre élément en contact avec la préforme notamment au cours de la phase de réchauffage avec un ou plusieurs des matériaux suivants : oxyde de chrome, nitrure de silicium, nitrure de bore, graphite. Il est également possible de prévoir une atmosphère inerte ou réductrice régnant dans l'enceinte du four pour éviter tout risque d'oxydation des matériaux. La préforme étant ainsi amenée à une viscosité en logarithme comprise entre 4,5 et 5,5, elle est pressée pour obtenir la lentille souhaitée.

Selon un mode préféré de l'invention, la préforme est placée sur un support durant les opérations de chauffage et de pressage ainsi que pendant le transfert d'une opération à l'autre.

Une telle mise en oeuvre du procédé de fabrication de lentille permet d'éviter tout contact avec la surface de la lentille destinée à former la surface asphérique après pressage. L'absence de contact sur cette surface permet de garantir l'absence de toutes marques ou déformations qu'occasionnerait par exemple un outil de préhension pour transférer la préforme d'un poste de travail à un autre.

Cette particularité permet d'obtenir une surface asphérique telle que souhaitée immédiatement après pressage ; plus précisément, cette surface ne nécessitera pas de reprise ultérieurement comme cela aurait pu être le cas s'il y avait des défauts.

Par ailleurs, le choix d'un matériau, parmi ceux évoqués précédemment pour réaliser le support permet de limiter l'épaisseur reprise de la lentille formée à son contact. Les essais ont montré qu'une pollution sur une profondeur inférieure à un millimètre pouvait être atteinte.

Ultérieurement, il est donc possible de n'envisager qu'une simple reprise par exemple par polissage de la surface au contact du support. L'invention prévoit avantageusement une reprise sur une épaisseur inférieure à 3 mm.

Egalement pour limiter au maximum cette phase ultérieure de reprise en épaisseur sur la surface au contact du support, l'invention prévoit avantageusement un volume optimisé de la préforme, celle-ci possédant de préférence une forme paraboloïde, pour limiter les bavures lors du pressage. Ce volume optimisé présente également l'avantage d'une économie de matière.

De cette façon et selon une réalisation préférée de l'invention, la préforme est placée, sur sa face arrière, au contact d'un support et après l'étape de chauffage un moule supérieur vient couvrir la préforme pour la presser et lui donner la forme asphérique souhaitée. La préforme ne possédant qu'un volume très légèrement supérieur à celui du volume de la lentille asphérique que l'on souhaite réalisée, seule une bavure très fine apparaît entre le support et le moule supérieur et donc à la base de la lentille. Cette bavure présente ainsi l'avantage de pouvoir être éliminée lors de la reprise de la face arrière de la lentille.

Suite à l'étape de pressage, la lentille peut subir une étape de recuisson.

Selon la réalisation préférée dans laquelle la préforme est associée à un support, durant le transfert vers par exemple une arche de recuisson et durant l'étape de recuisson, la lentille obtenue après pressage reste avantageusement associée au support.

Les lentilles obtenues selon ce procédé possèdent effectivement les caractéristiques requises notamment en vue d'une application pour des projecteurs ellipsoïdaux. Elles présentent notamment une bonne transmission dans le visible et des indices de réfraction peu dispersés. Par ailleurs, le procédé ne comporte pas d'étape délicate pouvant conduire à des coûts trop importants. En effet, ni la préforme ni la lentille ne subissent notamment aucune étape de polissage de coût élevé tel qu'un polissage du type poli-feu. De plus, l'étape de fusion reste des plus classiques. Seule la face arrière de la lentille, c'est-à-dire la face plane peut subir un doucissage et un polissage qui restent des opérations classiques et peu coûteuses. L'invention prévoit alors avantageusement que la préforme présente un poids supérieur d'au moins 10%, de façon à compenser les pertes de matière dues au polissage. Toutefois, selon une variante de l'invention, il est prévu un poids de la préforme le plus proche possible de celui de la lentille à réaliser. De préférence, l'invention prévoit selon cette variante un poids de la préforme supérieur d'au plus 10% à celui de la lentille et avantageusement proche de 1 %.

Des essais et mesures ont été effectuées sur des lentilles asphériques destinées à être utilisées pour des projecteurs ellipsoïdaux. Ces lentilles ont été fabriquées à partir de la composition comprenant les constituants ci-après dans les proportions pondérales suivantes :

| | |
|---|---|
| SiO₂ | 73 , 50 % |
| Al₂O₃ | 1 , 60 % |
| Na₂O | 14 , 50 % |
| Cao | 10 , 00 % |

Les essais sont réalisés sur des lentilles présentant un diamètre de 64mm et un poids de 80g. Pour fabriquer une telle lentille, il est prévu d'utiliser une préforme de 100g, ce qui correspond à un poids supérieur de 25% à celui de la lentille. La masse volumique du verre étant 2,50 g/cm³, il est possible de déterminer le volume de la préforme qui est de 40 cm³.

Il est ainsi possible de concevoir un moule pour réaliser la préforme en lui conférant la forme dont il a été fait mention précédemment.

Des mesures ont été effectuées sur des lentilles ainsi réalisées. Tout d'abord, il est apparu que la transmission dans le spectre visible est supérieure à 80%.

Par ailleurs, des mesures de l'indice de réfraction par rapport à celui de l'air ambiant ont été réalisées. L'indice moyen est égal à 1,51741 ± 5. 10⁻⁵. Des mesures de l'indice de réfraction Ni ont également été effectuées pour trois longueurs d'ondes différentes λi :

| | |
|---|---|
| λ₁ = 480 nm | N1 = 1,52378 ± 5.10⁻⁵ |
| λ₂ = 589 nm | N2 = 1,51716 ± 5.10⁻⁵ |
| λ₃ = 644 nm | N3 = 1,51500 ± 5.10⁻⁵ |

Ces résultats montrent que le verre est peu dispersif. De plus, la constringence qui permet de caractériser la dispersion d'une substance a également été mesurée; celle-ci est égale à 61 ce qui caractérise une substance peu dispersive.

Ces essais et mesures montrent que la lentille réalisée selon l'invention satisfait aux exigences requises, notamment celles pour la réalisation de lentilles asphériques utilisées dans des projecteurs ellipsoïdaux. Par ailleurs, la composition du verre selon l'invention permet de réaliser ces lentilles avec un coût relativement faible, les éléments choisis étant peu onéreux. De plus, les matières premières qui sont à l'origine de ladite composition peuvent comprendre partiellement voire totalement des verres recyclés, ce qui peut encore limiter les coûts.

De même, le procédé de fabrication selon l'invention qui ne comprend que des étapes relativement classiques, notamment en ce qui concerne la fusion, et les étapes d'amélioration de l'état de surface, du type poli-feu, qui sont quasi inexistantes, conduisent également à limiter les coûts de fabrication de ces lentilles.

## Revendications

1. Procédé de fabrication d'une lentille asphérique pour réaliser un projecteur ellipsoïdal par pressage d'une préforme, ***caractérisé en ce que*** la préforme est réchauffée jusqu'à une température comprise entre 750°C et 1100°c, ***en ce que*** la préforme est placée sur le même support durant son réchauffage, son pressage et une étape de recuisson, ***et en ce que*** la lentille est composé d'une matrice verrière comprenant les constituants ci-après dans les proportions pondérales suivantes :
| | |
|---|---|
| SiO₂ | 65-85% |
| Al₂O₃ | 0-10% |
| B₂O₃ | 0-20% |
| Li₂O + Na₂O + K₂O | 3-20% |
| CaO + MgO + BaO | 0-15% |
| FeO + Fe₂O₃ | 0-0,1% |
la teneur en K₂O demeurant égale ou inférieure à 1% et la teneur en BaO demeurant égale ou inférieure à 1%.

2. Procédé de fabrication d'une lentille selon la revendication 1, ***caractérisé en ce que*** la préforme est réchauffée en deux opérations successives, la première conduisant à une température comprise entre 300 et 600°C.

3. Procédé de fabrication d'une lentille selon la revendication 1 ou 2, ***caractérisé en ce que*** l'élément de verre est une préforme obtenue par pressage d'une goutte de verre dosée à l'aide d'un outil, tel qu'un poinçon associé à une cuvette d'écoulement formant l'extrémité d'un feeder.

4. Procédé de fabrication d'une lentille selon la revendication 1, 2 ou 3, ***caractérisé en ce que*** la préforme présente un poids supérieur d'au moins 10% à celui de la lentille et de préférence d'au moins 15%.

5. Procédé de fabrication d'une lentille selon l'une des revendications 1 à 4, ***caractérisé en ce que*** la teneur en CaO est au moins supérieure à 7%.

6. Procédé de fabrication d'une lentille selon l'une des revendications 1 à 5, ***caractérisé en ce que*** la lentille est composée d'une matrice verrière du type silico-sodo-calcique comprenant les constituants ci-après dans les proportions pondérales suivantes :
| | |
|---|---|
| SiO₂ | 65-75% |
| Al₂O₃ | 0-10% |
| Li₂O + Na₂O + K₂O | 8-18% |
| CaO + MgO + BaO | 5-15% |
| FeO + Fe₂O₃ | 0-0,1% |
la teneur en K₂O demeurant égale ou inférieure à 1% et la teneur en BaO demeurant égale ou inférieure à 1%.

7. Procédé de fabrication d'une lentille selon l'une des revendications 1 à 6, ***caractérisé en ce que*** la lentille est composée d'une matrice verrière du type silico-sodo-calcique comprenant les constituants ci-après dans tes proportions pondérales suivantes :
| | |
|---|---|
| SiO₂ | 72-74% |
| Al₂O₃ | 0- 3% |
| Li₂O + Na₂O + K₂O | 13-16% |
| CaO + MgO + BaO | 8-11% |
| FeO + Fe₂O₃ | 0-0,1% |
la teneur en K₂O demeurant égale ou inférieure à 1% et la teneur en BaO demeurant égale ou inférieure à 1 %.

8. Procédé de fabrication d'une lentille selon l'une des revendications 1 à 7, ***caractérisé en ce que*** la lentille est composée d'une matrice verrière du type silico-sodo-calcique comprenant les constituants ci-après dans les proportions pondérales suivantes :
| | |
|---|---|
| SiO₂ | 73,50% |
| Al₂O₃ | 1,60% |
| Na₂O | 14,50% |
| CaO | 10,00% |

9. Procédé de fabrication d'une lentille selon l'une des revendications 1 à 6, ***caractérisé en ce que*** la lentille est composée d'une matrice verrière du type silico-sodo-calcique comprenant les constituants ci-après dans les proportions pondérales suivantes :
| | |
|---|---|
| SiO₂ | 71,4% |
| Al₂O₃ | 0,6% |
| Na₂O | 13,7% |
| CaO | 9,6% |
| MgO | 4,0% |

10. Procédé de fabrication d'une lentille selon l'une des revendications 1 à 4, ***caractérisé en ce que*** la lentille est composée d'une matrice verrière du type boro-silicate comprenant les constituants ci-après dans les proportions pondérales suivantes :
| | |
|---|---|
| SiO₂ | 65-85% |
| B₂O₃ | 10-20% |
| Li₂O + Na₂O + K₂O | 3-20% |
| Al₂O₃ | 0- 5% |
la teneur en K₂O demeurant égale ou inférieure à 1%.

## Patentansprüche

1. Verfahren zur Herstellung einer asphärischen Linse zur Verwirklichung eines ellipsoidischen Scheinwerfers durch Pressen einer Vorform, **dadurch gekennzeichnet, dass** die Vorform bis auf eine Temperatur zwischen 750 und 1100°C wiedererhitzt wird, dass die Vorform während ihrer Wiedererhitzung, ihres Pressens und ihres Wiedererwärmens auf ein und demselben Träger angeordnet wird, und dass die Linse aus einer Glasmatrix besteht, welche die nachfolgend angeführten Bestandteile in den nachfolgend genannten Gewichtsanteilen enthält:
| | |
|---|---|
| SiO₂ | 65-85% |
| Al₂O₃ | 0-10% |
| B₂O₃ | 0-20% |
| Li₂O + Na₂O + K₂O | 3-20% |
| CaO + MgO + BaO | 0-15% |
| FeO + Fe₂O₃ | 0-0, 1% |
wobei der Gehalt an K₂O auf einem Wert von 1% oder einem kleineren Wert gehalten wird, und wobei der Gehalt an BaO auf einem Wert von 1% oder einem kleineren Wert gehalten wird.

2. Verfahren zur Herstellung einer Linse nach Anspruch 1, **dadurch gekennzeichnet, dass** die Vorform in zwei aufeinander folgenden Arbeitsgängen wiedererhitzt wird, von denen die erste bei einer Temperatur zwischen 300 und 600°C abläuft.

3. Verfahren zur Herstellung einer Linse nach Anspruch 1 oder 2, **dadurch gekennzeichnet, dass** das Glaselement eine Vorform ist, die durch Pressen eines abgemessenen Glastropfens mit Hilfe eines Werkzeugs gewonnen wird, wie etwa mit Hilfe einer Punze, die einer Ablaufschale zugeordnet ist, die das Ende eines Einspeisers bildet.

4. Verfahren zur Herstellung einer Linse nach Anspruch 1, 2 oder 3, **dadurch gekennzeichnet, dass** die Vorform ein Gewicht aufweist, das zumindest 10% höher ist als dasjenige der Linse, bevorzugt zumindest 15% höher.

5. Verfahren zur Herstellung einer Linse nach einem der Ansprüche 1 bis 4, **dadurch gekennzeichnet, dass** der Gehalt an CaO zumindest höher als 7% ist.

6. Verfahren zur Herstellung einer Linse nach einem der Ansprüche 1 bis 5, **dadurch gekennzeichnet, dass** die Linse aus einer Glasmatrix vom Typ Natrium-Calcium-Silika ist, aufweisend die nachfolgend angeführten Bestandteile in den nachfolgend genannten Gewichtsanteilen:
| | |
|---|---|
| SiO₂ | 65-75% |
| Al₂O₃ | 0-10% |
| Li₂O + Na₂O + K₂O | 8-18% |
| CaO + MgO + BaO | 5-15% |
| FeO + Fe₂O₃ | 0-0,1% |
wobei der Gehalt an K₂O auf einem Wert von 1% oder einem kleineren Wert gehalten wird, und wobei der Gehalt an BaO auf einem Wert von 1% oder einem kleineren Wert gehalten wird.

7. Verfahren zur Herstellung einer Linse nach einem der Ansprüche 1 bis 6, **dadurch gekennzeichnet, dass** die Linse aus einer Glasmatrix vom Typ Natrium-Calcium-Silikat ist, aufweisend die nachfolgend angeführten Bestandteile in den nachfolgend genannten Gewichtsanteilen:
| | |
|---|---|
| SiO₂ | 72-74% |
| Al₂O₃ | 0-3% |
| Li₂O + Na₂O + K₂O | 13-16% |
| CaO + MgO + BaO | 8-11% |
| FeO + Fe₂O₃ | 0-0,1% |
wobei der Gehalt an K₂O auf einem Wert von 1% oder einem kleineren Wert gehalten wird, und wobei der Gehalt an BaO auf einem Wert von 1% oder einem kleineren Wert gehalten wird.

8. Verfahren zur Herstellung einer Linse nach einem der Ansprüche 1 bis 7, **dadurch gekennzeichnet, dass** die Linse aus einer Glasmatrix vom Typ Natrium-Calcium-Silikat ist, aufweisend die nachfolgend angeführten Bestandteile in den nachfolgend genannten Gewichtsanteilen:
| | |
|---|---|
| SiO₂ | 73,50% |
| Al₂O₃ | 1,6% |
| Na₂O | 14,50% |
| CaO | 10,00% |

9. Verfahren zur Herstellung einer Linse nach einem der Ansprüche 1 bis 6, **dadurch gekennzeichnet, dass** die Linse aus einer Glasmatrix vom Typ Natrium-Calcium-Silikat ist, aufweisend die nachfolgend angeführten Bestandteile in den nachfolgend genannten Gewichtsanteilen:
| | |
|---|---|
| SiO₂ | 71,40% |
| Al₂O₃ | 0,6% |
| Na₂O | 13,7% |
| CaO | 9,6% |
| MgO | 4,0% |

10. Verfahren zur Herstellung einer Linse nach einem der Ansprüche 1 bis 4, **dadurch gekennzeichnet, dass** die Linse aus einer Glasmatrix vom Typ Bor-Silikat ist, aufweisend die nachfolgend angeführten Bestandteile in den nachfolgend genannten Gewichtsanteilen:
| | |
|---|---|
| SiO₂ | 65-85% |
| B₂O₃ | 10-20% |
| Li₂O + Na₂O + K₂O | 3-20% |
| Al₂O₃ | 0-5% |
wobei der Gehalt an K₂O auf einem Wert von 1% gehalten wird.

## Claims

1. Method of manufacture of an aspheric lens for making an ellipsoidal projector by pressing a preform, **characterized in that** the preform is reheated to a temperature comprised between 750°C and 1100°C, and **in that** the preform is placed on the same support during reheating, pressing, and an annealing step, and **in that** the lens is composed of a vitreous matrix comprising the following constituents in the following proportions by weight:
| | |
|---|---|
| SiO₂ | 65-85% |
| Al₂O₃ | 0-10% |
| B₂O₃ | 0-20% |
| Li₂O + Na₂O + K₂O | 3-20% |
| CaO + MgO + BaO | 0-15% |
| FeO + Fe₂O₃ | 0-0.1% |
the K₂O content remaining equal to or less than 1% and the BaO content remaining equal to or less than 1%.

2. Method of manufacture of a lens according to claim 1, **characterized in that** the preform is reheated in two successive operations, the first resulting in a temperature comprised between 300 and 600°C.

3. Method of manufacture of a lens according to claim 1 or 2, **characterized in that** the glass element is a preform obtained by pressing a metered drop of glass using a tool such as a plunger associated with a flow trough forming the end of a feeder.

4. Method of manufacture of a lens according to claim 1, 2 or 3, **characterized in that** the preform has a weight greater by 10% than that of the lens and preferably by at least 15%.

5. Method of manufacture of a lens according to one of claims 1-4, **characterized in that** the CaO content is at least greater than 7%.

6. Method of manufacture of a lens according to one of claims 1-5, **characterized in that** the lens is composed of a vitreous matrix of sodium calcium silicate type comprising the following constituents in the following proportions by weight:
| | |
|---|---|
| SiO₂ | 65-75% |
| Al₂O₃ | 0-10% |
| Li₂O + Na₂O + K₂O | 8-18% |
| CaO + MgO + BaO | 5-15% |
| FeO + Fe₂O₃ | 0-0.1% |
the K₂O content remaining equal to or less than 1% and the BaO content remaining equal to or less than 1%.

7. Method of manufacture of a lens according to one of claims 1-6, **characterized in that** the lens is composed of a vitreous matrix of sodium calcium silicate type comprising the following constituents in the following proportions by weight:
| | |
|---|---|
| SiO₂ | 72-74% |
| Al₂O₃ | 0-3% |
| Li₂O + Na₂O + K₂O | 13-16% |
| CaO + MgO + BaO | 8-11% |
| FeO + Fe₂O₃ | 0-0.1% |
the K₂O content remaining equal to or less than 1% and the BaO content remaining equal to or less than 1%.

8. Method of manufacture of a lens according to one of claims 1-7, **characterized in that** the lens is composed of a vitreous matrix of sodium calcium silicate type comprising the following constituents in the following proportions by weight:
| | |
|---|---|
| SiO₂ | 73.50% |
| Al₂O₃ | 1.60% |
| Na₂O | 14.50% |
| CaO | 10.00% |

9. Method of manufacture of a lens according to one of claims 1-6, **characterized in that** the lens is composed of a vitreous matrix of sodium calcium silicate type comprising the following constituents in the following proportions by weight:
| | |
|---|---|
| SiO₂ | 71.4% |
| Al₂O₃ | 0.60% |
| Na₂O | 13.7% |
| CaO | 9.6% |
| MgO | 4.0% |

10. Method of manufacture of a lens according to one of claims 1-4, **characterized in that** the lens is composed of a vitreous matrix of borosilicate type comprising the following constituents in the following proportions by weight:
| | |
|---|---|
| SiO₂ | 65-85% |
| B₂O₃ | 10-20% |
| Li₂O + Na₂O + K₂O | 3-20% |
| Al₂O₃ | 0- 5% |
the K₂O content remaining equal to or less than 1%.
